# EUROPEAN PATENT APPLICATION

(11) **EP 4 686 527 A1**
(43) Date of publication of application: **04.02.2026**
(21) Application number: 24192731.8
(22) Date of filing: 02.08.2024
(51) Int. Cl.: B23Q 9/00, B23D 47/02, B27B 9/04

(54) **SUPPORT ASSEMBLY FOR A GUIDE RAIL FOR A CUTTING TOOL**

(71) Applicant: Festool GmbH, 73240 Wendlingen am Neckar (DE)
(72) Inventor: SPENGLER, Wolfgang, 73240 Wendlingen (DE); RANDECKER, Andreas, 73240 Wendlingen (DE); BROSCH, Marco Christoph, 73240 Wendlingen (DE); SEYFRIED, Boris, 73240 Wendlingen (DE)
(74) Representative: Maiwald GmbH

(57) **Abstract**

A support assembly (20) for a guide rail (20) for a cutting tool (12) is described. The support assembly (20) comprises a base element (34) with a mechanical interface (36) which is configured for a detachable connection with the guide rail (20). Further, a support arm (46) having a first end (48) pivotably supported on the base element (34) and a second end (56) configured to support the support assembly (28) on a support surface (18) is provided. The support assembly (20) additionally comprises a locking mechanism (68) configured to selectively lock the support arm (46) with respect to the base element (34) in at least two different relative pivotal positions. Furthermore, a guiding assembly (10) for a cutting tool (12) as well as a use of a guiding assembly (10) is presented. Also, a use of a support assembly is described. Moreover, a method for operating a guiding assembly (10) is explained.

## Description

The present invention relates to a support assembly for a guide rail for a cutting tool.

The invention is additionally directed to a guiding assembly for a cutting tool.

Furthermore, the invention is about a use of a support assembly as well as a method for operating a guiding assembly mentioned above.

Additionally, the invention relates to a use of a support assembly.

A cutting tool, e.g. a handheld saw, may be used together with a guide rail. In this context, a guide rail is an elongated part, often made from aluminum or another metal, wherein the guide rail is used for guiding the cutting tool such that a workpiece may be modified in a precise manner. In case the cutting tool is a handheld saw, using a guide rail allows to make straight cuts fulfilling tight tolerance requirements. When using a cutting tool together with a guide rail, the guide rails is often positioned directly on the workpiece to be modified. In other words, the guide rail rests on the workpiece. The workpiece may rest on the floor or on any other suitable support surface, e.g. provided by a workbench, an underlay board, or a chipboard. Since the guide rail usually has a fixed length, the guide rail may protrude beyond the workpiece in the working direction. This may especially be the case in the end regions of the guide rail. This may cause instability negatively affecting the quality of the work result.

An objective of the present invention is therefore to provide a solution that increases the AS:TOP:MBL
stability when using a guide rail. Thereby, also the quality of a work result may be enhanced.

The problem is at least partially solved or alleviated by the subject matter of the independent claims of the present invention, wherein further examples are incorporated in the dependent claims.

The problem is at least partially solved by a support assembly for a guide rail for a cutting tool. The support assembly comprises a base element comprising a mechanical interface. The mechanical interface is configured for a detachable connection with the guide rail. Further, the support assembly comprises a support arm having a first end pivotably supported on the base element and a second end configured to support the support assembly on a support surface. In addition, a locking mechanism is provided, which is configured to selectively lock the support arm with respect to the base element in at least two different relative pivotal positions. In the present context, the first end and the second end of the support arm are arranged opposite to one another. Using the mechanical interface of the base element, the support assembly can be connected to a guide rail particularly easily and quickly. Thus, using the second end of the support arm, the support assembly may be used to support the guide rail on a support surface. As has been mentioned before, the support surface may be a portion of a floor or on any other suitable support surface, e.g. provided by a workbench, an underlay board, or a chipboard. The support assembly may be particularly used to support a region of the guide rail which protrudes, e.g. over a workpiece to be modified. Due to the fact that the support arm is pivotably supported on the base element and may be locked with respect to the base element in at least two different relative positions, the support assembly may be adjusted to different situations. More precisely, a distance or height of the guide rail with respect to the support surface may be adjusted by adjusting the support assembly. Consequently, using the support assembly, the stability of the guide rail may be enhanced. At the same time, the quality of the work result may be improved.

The general idea underlying the present invention is, thus, to ensure support of a guide rail, in particular in protruding end regions, by the support assembly according to the invention. The support arm is pivotably supported on the base element, such that the support assembly is quickly adjustable in height and can be easily adapted to different workpieces and/or situations. The support assembly of the present invention is particularly advantageous over the use of screw clamps to securely fasten the guide rail to the workpiece. As compared to the use of screw clamps, using the support assembly is less complicated and time-saving. The advantages of the present invention may become particularly clear when considering the use of a cutting tool to cut a narrow lath. In such a case, a guide rail may be used in order to enhance the precision of the cut. However, the lath only provides a comparatively small support surface for the guide rail and, thus, the cutting tool. In prior art solutions, this requires the use of specially manufactured underlays and supports, as otherwise the cutting tool and the guide rail are not supported with sufficient stability. This problem is solved by using the support assembly according to the present invention.

The adjustment of the support arm relative to the base element can be stepless. This means that the locking mechanism is configured to selectively lock the support arm in an infinity of relative pivotal positions with respect to the base element. This may also allow the support arm to be folded away such that the support assembly also has a compact design due to the pivotable support arm.

In the context of the present invention, the cutting tool can be in particular a circular saw, especially a plunge-cut saw.

The support assembly can be set by adjusting the support arm so that the height adjustment ranges in particular from 8 mm to 95 mm. The range of 8 mm to 95 mm corresponds to frequent thicknesses of workpieces. Consequently, the support assembly may be used in combination with commonly sized workpieces.

The mechanical interface can be designed in different ways in order to be detachably attachable to the guide rail. According to one variant, the mechanical interface can comprise an eccentric cam connected to a lever. Thus, the support assembly can be clamped on the guide rail, wherein the cam may engage a groove provided in the guide rail. Preferably, the support assembly may be connected to the guide rail at any position along the guide rail. The lever connected to the eccentric cam may be operably by hand. Thus, no tools may be required for connecting the support assembly to the guide rail and for disconnecting the support assembly from the guide rail, making this variant particularly simple and allowing quick adjustment. No tools may be required for this variant.

It is also possible for the mechanical interface to comprise a screw for connecting the support assembly to the guide rail. The screw may be connected to a lever or to a knurled knob. Thus, the screw may be operated using the lever or knob, i.e. the screw can be screwed in and out using the lever or knob. No tools may be required for this variant either.

According to a further example, the mechanical interface may comprise a screw for connecting the support assembly to the guide rail, wherein the screw comprises a tool engagement interface such that the screw may be operated using a tool, e.g. a screwdriver or a hexagon socket screw key. Also in this example, the support assembly may be connected to the guide rail and disconnected from the guide rail in a quick and simple manner.

In the examples of the mechanical interface comprising a screw, the screw may be configured to be screwed into a sliding block provided in a groove of the guide rail. This allows to steplessly guide the support assembly along the guide rail via the mechanical interface. This variant is particularly stable and also allows any relative positioning of the support assembly and guide rail.

The support assembly can further comprise a support strut coupling the support arm and the base element. This additionally stabilizes the entire support assembly. Thus, the support assembly is suitable to be exposed to high loads.

The support strut can comprise a first end pivotably supported on the support arm and a second end coupled to the base element via a translatory guiding mechanism. Here, the locking mechanism can be configured to selectively block the guiding mechanism. Alternatively, the support strut can comprise a first end pivotably supported on the base element and a second end coupled to the support arm via a translatory guiding mechanism. Here the locking mechanism can also be configured to selectively block the guiding mechanism. In both variants, the translatory guiding mechanism allows the strut to move while the support arm is adjusted relative to the base element. Consequently, using the strut does not hinder the movability of the support arm. In addition, the support arm, which is mounted on the base element on one side and is coupled to the support strut on the other side, can be fixed in one position via the locking mechanism of the strut. Consequently, also the support arm is stably fixed. In both cases, the translatory guiding mechanism can comprise an oblong hole and a sliding element received in the oblong hole such that it can move along the direction of principle extension of the oblong hole. Oblong holes are particularly easy to manufacture and enable stepless adjustment of the strut. Furthermore, such a mechanism is highly robust. Optionally, the guiding mechanism, e.g. the oblong hole, may comprise one or more detents such that the associated end of the support strut may be arranged in positions defined by the one or more detents. In case a plurality of detents are provided, the detents may be distributed evenly over the guiding mechanism, e.g. the oblong hole. Thus, also the positions defined by the detents are distributed evenly over the guiding mechanism, e.g. the oblong hole.

The locking mechanism can be configured to selectively lock the support arm with respect to the base element by a form-fit and/or by a frictional engagement. Frictional engagement allows particularly fast and stepless adjustment. With a frictional engagement, an eccentric element can also be used in the locking mechanism, similar to the eccentric cam described for the mechanical interface. Alternatively, a screw connected to a lever or knurled knob may be used. A form-fit engagement is a particularly reliable and stable engagement.

The support assembly can further comprise a slider. The slider can be translatorily movably supported at the second end of the support arm such that the slider can be selectively moved along a sliding direction oriented substantially perpendicular to a direction of principal extension of the support arm. In other words, the slider may extend in a direction transverse to the direction of principal extension of the support arm. The slider of the support assembly provides additional stabilization and helps to prevent the guide rail from tipping sideways if the support assembly is connected to the guide rail. The slider may be rod-shaped. This means that the slider may be formed as an elongated part, e.g. having a circular cross section.

The slider can comprise an abutment surface configured to abut against a workpiece. Thus, the slider may be aligned with respect to the workpiece using the abutment surface. In a case in which the support assembly is connected to a guide rail, the abutment surface, thus, also allows the cutting tool and the guide rail to be aligned relative to the workpiece. In this way, the support assembly acts as a support and at the same time as an alignment aid. Consequently, the quality of a work result may be enhanced using the slider with the abutment surface. This is particularly useful when cutting narrow laths precisely and fast.

According to an example, one or more support elements may be provided on the slider. Each of the support elements may be configured to support the support assembly on the support surface. The support elements may be made from a polymer material, e.g. from an elastic polymer material. As previously indicated, the slider can be used to support the support assembly on a support surface in a stable manner. The support elements further enhance this effect.

In another example, the slider can comprise a thickened end that carries the abutment surface and/or acts as a support element. The thickened end can have a cylindrical shape. Thus, using the thickened end, positioning of a workpiece and supporting the support assembly on a support surface is further facilitated.

The support assembly can comprise a slider locking mechanism configured to selectively lock the slider with respect to the support arm in at least two different relative translatory positions. The actuation of the slider locking mechanism can be manual and tool-free. This can also be realized using an eccentric element, for example. Alternatively, the slider locking mechanism may comprise a clamping screw. The slider locking mechanism makes it possible to position the slider with its abutment surface relative to the workpiece and hold it exactly in one position. This means that unintentional displacement of the slider can be avoided occur during use of the support assembly, e.g. during the modification of a workpiece. This makes the slider suitable as a precise alignment aid.

In another example, the slider comprises a lateral clamping surface for clamping the workpiece. Using this clamping surface, a workpiece may be clamped between the guide rail and the slider. Consequently, the workpiece may be held in a desired position relative to the guide rail. This requires that the support assembly is connected to the guide rail. In this context, the clamping surface may be provided on a rubber element provided on the slider. This increases friction such that the workpiece can be clamped reliably.

Moreover, a connection interface for an auxiliary support element can be provided on the support arm. This auxiliary support element can be accommodated in or on the connection interface and can be adjusted and fixed relative to it. The auxiliary support element can, thus, be used as an extension of the support arm in order, for example, to be able to at least partially cut particularly thick workpieces to size.

It is conceivable that the slider described above, which is movably supported at the second end of the support arm, is adopted by the connection interface and acts as an auxiliary support element. Thus, the slider can be used on the one hand in accordance with the above explanations and on the other hand may act as an extension of the support arm, depending on how it is arranged at the support arm.

The problem is further at least partially solved by a guiding assembly for a cutting tool, the guiding assembly comprising a guide rail for slidably supporting the cutting tool, and a support assembly according to the present invention, wherein the support assembly is connected to the guide rail via the mechanical interface of the base element. As has been mentioned before, using the support assembly, the stability of the guide rail may be enhanced. In other words, the guiding assembly provides a comparatively stable guidance for the cutting tool. At the same time, the quality of the work result may be improved. Moreover, a distance or height of the guide rail with respect to a support surface, on which the guiding assembly is used, may be adjusted by adjusting the support assembly.

The guide rail can comprise an upper side, wherein a guiding feature configured to guide the cutting tool can be arranged on the upper side. Further, the support assembly can be configured in such a way that it does not extend over the guiding feature with respect to a direction oriented perpendicular to the upper side. This prevents the movement of the cutting tool along the guiding feature of the guide rail from being undesirably blocked or influenced by the support assembly. In other words, the support assembly does not hinder a movement of the cutting tool with respect to the guide rail.

The guide rail can comprise a lower side provided opposite a side of the guide rail configured for slidably supporting the cutting tool. Additionally, the support assembly does not extend over the lower side with respect to a direction oriented perpendicular to the lower side, if the support assembly is in a retracted state. In this context, a retracted state is defined in that the support arm of the support assembly is substantially oriented along an edge of the guide rail. Thus, in such a configuration, the support assembly requires very little space only. This means that the guide rail can be stored with a mounted support assembly in a space-saving manner. In addition, this simplifies the handling and transport of the guide rail with a mounted support assembly.

The guiding assembly can comprise two support assemblies. Each support assembly can be connected to the guide rail via the mechanical interface of the respective base element. Two support assemblies can be used to support the guide rail at both end regions so that the guide rail may be supported on a support surface in a particularly stable manner. In particular, the guide rail cannot tip either at the start of cutting the workpiece or at the end. Moreover, using two support assemblies, the guide rail may be adjusted with respect to the support surface as far as a distance or height of the guide rail over to the support surface is concerned and as far as an inclination of the guide rail with respect to the support surface is concerned. In doing so, imperfections in the support surface, e.g. unevenness, may be compensated.

The two support assemblies can be identical support assemblies. This reduces manufacturing costs on the one hand and simplifies handling on the other, as the user does not have to consider where which of the support assemblies must be attached to the guide rail.

The guiding assembly can further comprise at least one end stop detachably mounted on the guide rail and configured for abutting against a workpiece. The end stop is particularly useful for aligning workpieces with respect to the guide rail. Thus, precise modification of the workpiece is ensured. Moreover, the end stop can absorb the feed force from the user and the cutting forces during cutting.

Additionally, the problem is at least partially solved by a use of a support assembly according to the present invention for arranging a guide rail at a distance from a support surface and/or for aligning a guide rail for a cutting tool with respect to a workpiece and/or for clamping a workpiece. Thus, the support assembly may be used for multiple purposes. This facilitates the modification of a workpiece when using such a support assembly. This is in particular the case when considering the fact that each of the above-mentioned functions would need to be provided by a separate device. As far as the details of supporting the guide rail, aligning the workpiece and clamping the workpiece are concerned, reference is made to the above explanations.

Further, the problem is at least partially solved by a use of a guiding assembly for clamping a workpiece between a portion of the support assembly and a portion of the guide rail. Thus, the workpiece is reliably held between the support assembly and the guide rail. Thereby, the workpiece is reliably held in a defined relative position with respect to the guide rail. This facilitates the modification of the workpiece using a cutting tool in connection with the guide rail. In this way, the workpiece is prevented from slipping relative to the guide rail and also from slipping under the guide rail when the workpiece is cut with the cutting tool.

Moreover the problem is at least partially solved by a method for operating a guiding assembly according to the present invention, comprising adjusting a distance of the guide rail from a support surface by pivoting the support arm of the support assembly with respect to the support element of the support assembly and/or adjusting a position of the slider of the support assembly with respect to the support arm of the support assembly in order to provide an alignment for a workpiece with respect to the guide rail and/or clamping a workpiece between the guide rail and the support assembly by pivoting the support arm of the support assembly with respect to the base element of the support assembly. The resulting advantages can be found in the above paragraphs.

It should be noted that the above examples may be combined with each other irrespective of the aspect involved.

These and other aspects of the present invention will become apparent from and elucidated with reference to the examples described hereinafter.

Examples of the invention will be described in the following with reference to the following drawings:
- Fig. 1: shows an arrangement of a guiding assembly according to the present invention for a cutting tool with a schematically illustrated workpiece,
- Fig. 2: shows one support assembly according to the present invention of the guiding assembly according to the invention mounted on a guide rail in a side view, wherein the support assembly is in a retracted state,
- Fig. 3: shows the support assembly according to the present invention in a separate perspective view,
- Fig. 4: shows the support assembly from Figure 3 in another configuration,
- Fig. 5: shows the support assembly from Figure 3 in a top view,
- Fig. 6: shows the support assembly from Figure 3 in a side view,
- Fig. 7: shows a support assembly according to another variant in a separate perspective view,
- Fig. 8: shows the support assembly from Figure 7 in a retracted state in a perspective view,
- Fig. 9: shows a support assembly according to a further variant in a separate perspective view,
- Fig. 10: shows the support assembly from Figure 9 in another perspective view,
- Fig. 11: shows the support assembly from Figure 9 with an auxiliary support element in a perspective view,
- Fig. 12: shows the support assembly from Figure 11 with an auxiliary support element according to another variant in a perspective view,
- Fig. 13: shows an end stop mounted on a guide rail in a perspective view,
- Fig. 14: shows the end stop from Figure 13 in a perspective view,
- Fig. 15: shows the end stop from Figure 13 in another perspective view,
- Fig. 16: shows another arrangement of the guiding assembly according to the present invention in a perspective view, and
- Fig. 17: shows the arrangement of the guiding assembly from Figure 16 in another perspective view.

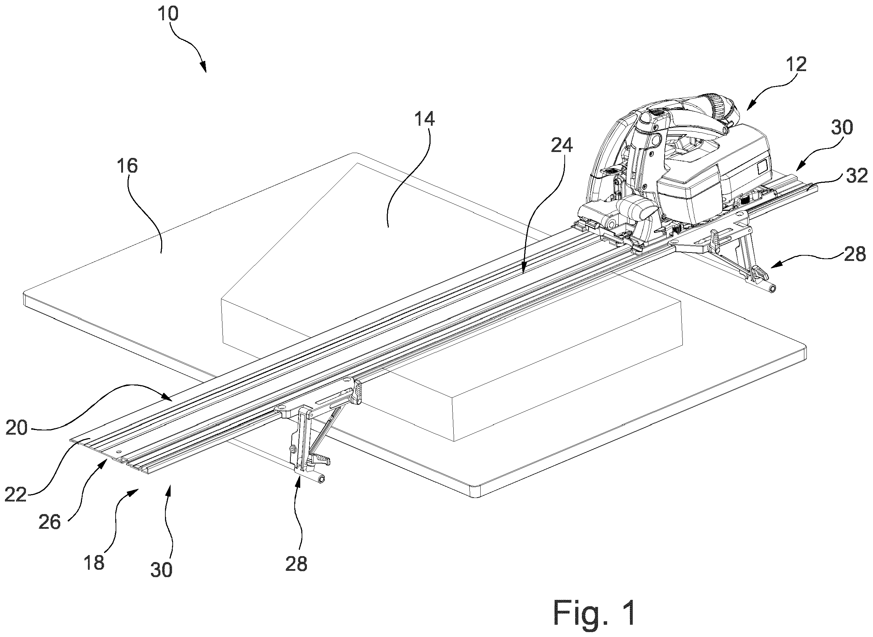

Figure 1 shows an arrangement of a guiding assembly 10 for a cutting tool 12 with a schematically illustrated workpiece 14. The cutting tool 12 may in particular be a circular saw, in particular a plunge-cut saw, as shown in Figure 1.

The workpiece 14 rests on an auxiliary support 16. The auxiliary support 16 in turn rests on a support surface 18, such as a floor or a workbench. In the present example, the auxiliary support is a board-shaped part located underneath the workpiece 14.

The guiding assembly 10 comprises a guide rail 20 for sliding support of the cutting tool 12.

The guide rail 20 comprises an upper side 22 on which a guiding feature 24 is provided. The guiding feature 24 extends along the main direction of extension of the guide rail 20 and may be provided in the form of at least one groove or elongated protrusion on the guide rail 20.

The guiding feature 24 serves to guide the cutting tool 12 along the guide rail 20. On the side of the cutting tool 12 facing the upper side 22, a corresponding structure is provided, which can be coupled displaceably to the guiding feature 24. Thus, in case the guiding feature 24 is provided in the form of a groove, the cutting tool 12 may comprise a protrusion which is configured to be received in the groove. In case the guiding feature 24 is provided in the form of an elongated protrusion, the cutting tool 12 may comprise a groove which is configured to receive the elongated protrusion.

In the present example, the guiding features 24 is provided in the form of an elongated protrusion and the cutting tool 12 features an associated groove.

In addition, the guide rail 20 comprises a lower side 26, provided opposite the upper side 22. The lower side 26 faces the workpiece 14 and is in contact with the workpiece 14 during a cutting process.

In addition, the guiding assembly 10 comprises two support assemblies 28, which serve to support the guide rail 20 on the support surface 18.

In Figure 1, the support assemblies 28 are designed differently. More precisely, the support assemblies 28 are mirrored.

However, it is also conceivable that the support assemblies 28 are designed identically (not shown in the Figures). In this case, one of the support assemblies 28 shown in Figure 1 would therefore be provided twice and would accordingly replace the other one.

The support assemblies 28 are provided in end regions 30 of the guide rail 20, where the guide rail 20 protrudes beyond the workpiece 14. Thus, the support assemblies are provided both on a portion of the guide rail 20 supporting the cutting tool 12 when starting a cutting process and on a portion of the guide rail 20 supporting the cutting tool 12 when ending the cutting process. In general, however, the support assemblies 28 can be attached at any position along the guide rail 20. For this purpose, a holding groove 32 is provided on the guide rail 20, to which the support assemblies 28 are detachably coupled.

The support assemblies 28 do not extend beyond the guiding feature 24 of the guide rail 20 with respect to a direction perpendicular to the upper face 22.

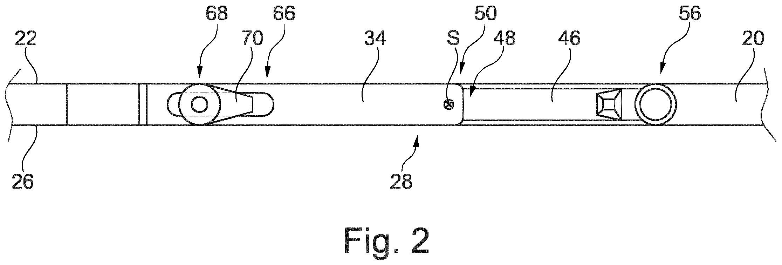

Furthermore, the support assemblies 28 are adjustable in their height and can be adjusted steplessly from a retracted state, as shown in Figure 2, to an extended state, as shown in Figure 1. In the retracted state, the support assembly 28 does not extend beyond the lower side 26 with respect to a direction oriented perpendicular to the lower side 26 (see in particular Figure 2).

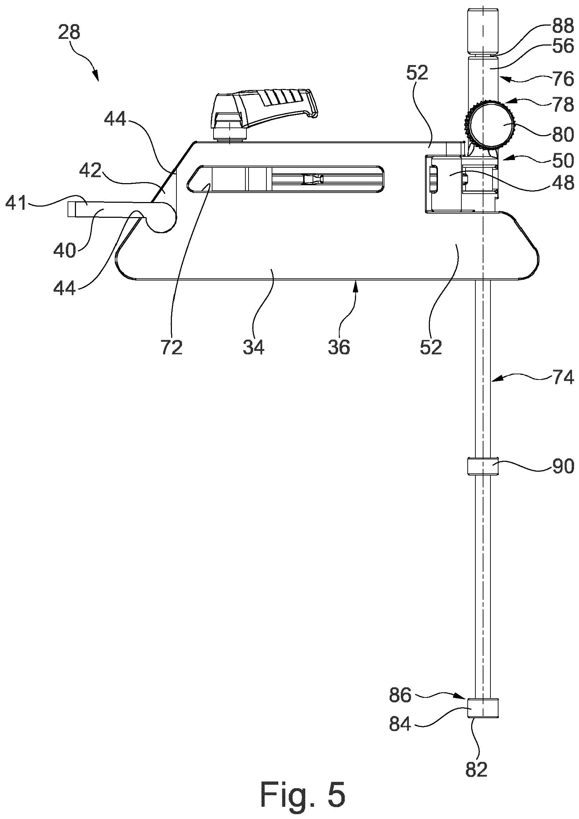

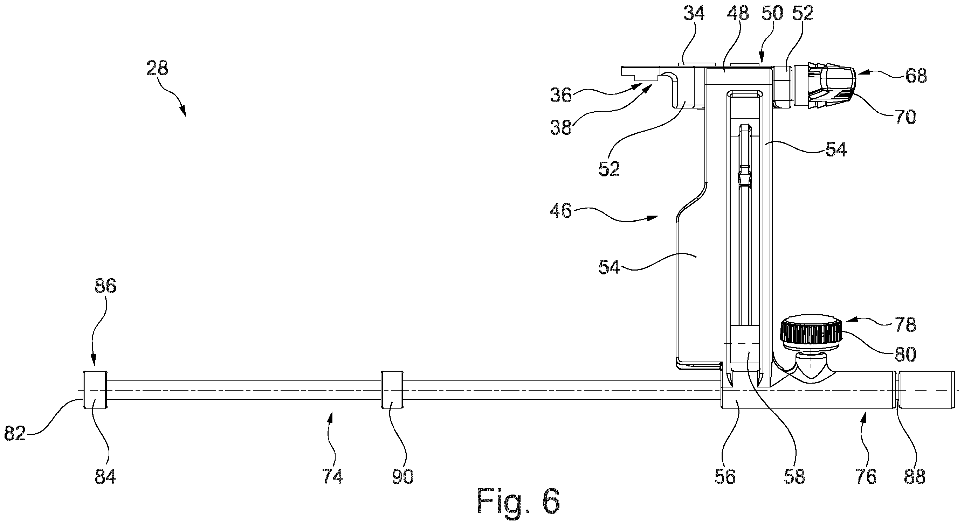

Figures 2 to 6 show a support assembly 28 in more detail. Its structure will be discussed below.

The support assembly 28 comprises a plate-shaped base element 34 with a mechanical interface 36. The mechanical interface 36 is configured for a detachable connection with the guide rail 20. More specifically, the mechanical interface 36 is detachably couplable to the holding groove 32 of the guide rail 20.

For this purpose, the mechanical interface 36 of the support assembly 28 shown in Figures 2 to 6 has a profile 38 which is complementary to a profile of the holding groove 32. Thus, the profile 38 of the mechanical interface 36 can be inserted into the holding groove 32 along the longitudinal extension of the holding groove 32 and thereby engages in the holding groove 32 and is guided along it.

In addition, an eccentric cam 40 is part of the mechanical interface 36. The eccentric cam 40 is mounted on one end of the base element 34 so that it can be rotated about an axis E for clamping the base element 34 in the holding groove 32.

The eccentric cam 40 is eccentrically mounted and/or has an eccentric geometry in the area of the axis E. In addition, the eccentric cam 40 is connected to a lever piece 41 extending from the axis E with a thickening end.

In addition, the lever piece 41 is arranged in a recess 42 provided on the base element 34. As a result, the lever piece 41 is even with the plate-shaped base element 34.

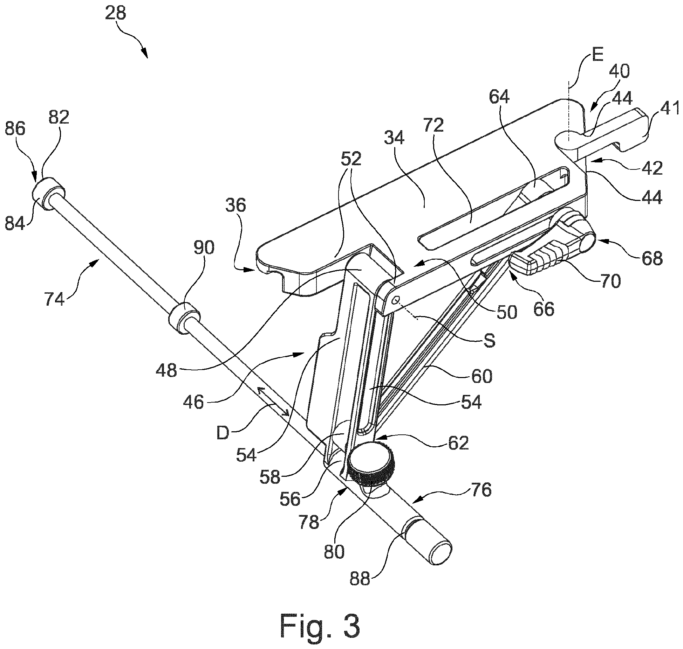

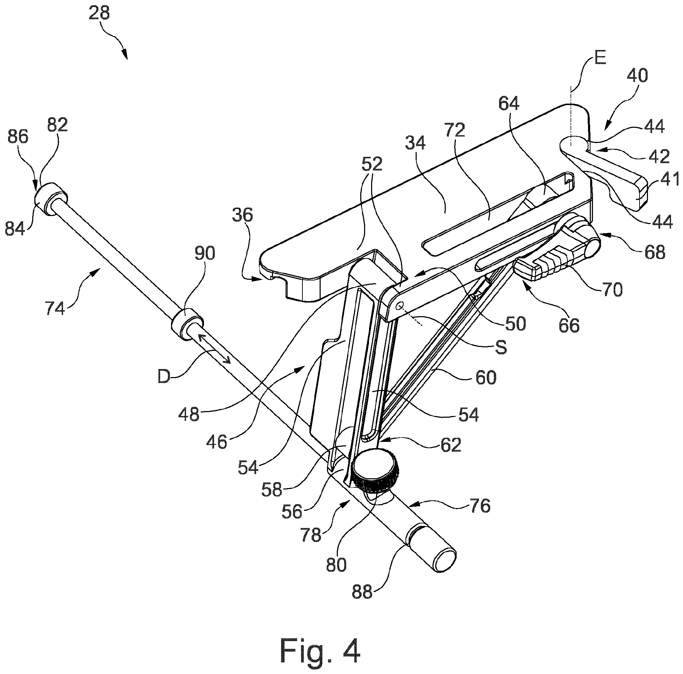

The recess 42 has two stops 44, which limit the movement of the lever piece 41 and, thus, of the eccentric cam 40 about the axis E in a defined manner. Thus, the mechanical interface 36 can be adjusted manually and without tools from an open position (see Figure 3) to a clamping position (see Figure 4).

Alternatively, it is also possible that the orientation of the lever piece 41 in Figure 4 corresponds to the open position and that in Figure 3 to the clamping position.

In the open position and in the clamping position, the lever piece 41 can be in contact with one of the stops 44 of the recess 42.

In the clamping position, the eccentric cam 40 creates a frictional engagement between the mechanical interface 36 and the guide rail 20. This is achieved by clamping the eccentric cam 40 directly or indirectly against the side of the guide rail 20. In this way, the support assembly 28 can be fixed on the guide rail 20 via the mechanical interface 36. The position of the support assembly 28 can be chosen freely along the extension of the guide rail 20.

In addition, the support assembly 28 has a support arm 46.

The support arm 46 has a first end 48 by which it is pivotably supported around an axis S on the base element 34. More precisely, the support arm 46 is pivotably supported at the end of base element 34 opposite to the eccentric cam 40.

For this purpose, a joint 50 is formed between the support arm 46 and the base element 34. This joint 50 comprises two ribs 52 between which the first end 48 of the support arm 46 is arranged. In other words, the base element-sided part of the joint 50 is fork-shaped.

Starting from the first end 48, the support arm 46 extends in the form of two support arm ribs 54 to a second end 56. The second end 56 is configured to support the support assembly 28 on the support surface 18.

In the region of the second end 56 of the support arm 46, a first end 58 of a support strut 60 is provided between the support arm ribs 54, 56. The support strut 60 is coupling the support arm 46 and the base element 34. The support arm 46 and the support strut 60 are also pivotably relative to each other. For this purpose, a joint 62 is formed between the support arm 46 and the support strut 60.

The support strut 60 has a second end 64 which is coupled to the base element 34 via a translatory guiding mechanism 66. The translatory guiding mechanism 66 comprises an oblong hole that extends laterally along the base element 34 on the side of the base element 34 opposite the mechanical interface 36.

In addition, a locking mechanism 68 is provided, which is configured to selectively lock the support arm 46 with respect to the base element 34 in at least two different relative pivotal positions. For this purpose, the locking mechanism 68 is associated with the guiding mechanism 66 and coupled to the second end 64 of the support strut 60.

By tightening the locking mechanism 68, the guiding mechanism 66 can be selectively blocked. The locking mechanism 68 comprises a screw lever 70, which can be tightened or loosened by adjustment. If the screw lever 70 of the locking mechanism 68 is tightened, the locking mechanism 68 forms a frictional engagement with the base element 34 in the area of the translatory guiding mechanism 66. Adjustment of the locking mechanism 68 via the screw lever 70 may be performed manually, i.e. without a tool.

Alternatively, it is also conceivable that the locking mechanism 68 is configured to lock the support arm with respect to the base element 34 by a form-fit. Alternatively, it is also conceivable that the locking mechanism 68 comprises an eccentric element or a screw connected to a knurled knob instead of the screw lever 70.

This fixes the second end 64 of the support strut 60 in a position relative to the guiding mechanism 66. As already described, the first end 58 of the support strut 60 is coupled to the support arm 46 in the region of its second end 56, so that the support arm 46 is locked with respect to the base element 34. This allows the support assembly 28 to be continuously adjustable in height. In other words, a stepless adjustment is possible.

Furthermore, in the region of the guiding mechanism 66, an opening 72 is provided in the base element 34, which is located adjacent to the oblong hole of the guiding mechanism 66 and within which the second end 64 of the support strut 60 is movably arranged.

Due to the second end 64 arranged within the opening 72 and the first end 58 of the support strut 60 arranged between the ribs 52, the support strut 60 can be received completely within the support arm 46 and the base element 34 in the retracted state of the support assembly 28 (see Figure 2).

According to a further variant, the first end 58 of the support strut 60 could also be pivotably supported on the base element 34 and the second end 64 could be coupled to the support arm 46 via a translatory guiding mechanism that can be selectively blocked via a locking mechanism (not shown in Figures). This variant can be considered a cinematic inversion of the above-described variant.

The support assembly further comprises a slider 74 translatorily movably supported at the second end 56 of the support arm 46 such that the slider 74 can be selectively moved along a sliding direction D which is oriented substantially perpendicular to a direction of principal extension of the support arm 46. Thus, the slider 74 can slide along a direction transverse to the principal extension of the support arm 46.

In order to be supported for translational movement, the second end is fitted with a guide mount 76, which guides the slider 74 translationally. The guide mount 76 is formed by a cylindrical cut-out or guiding channel in the support arm 46.

Moreover, a slider locking mechanism 78 is provided. The slider locking mechanism 78 is associated with the guide mount 76 and configured to selectively lock the slider 74 with respect to the support arm 46 in at least two different relative translatory positions.

The slider locking mechanism 78 comprises a screw 80 connected to a knurled knob via which the slider 74 can be steplessly locked. The knurled knob and, thus, the screw 80 can be actuated manually, i.e.in a tool-free manner. The slider 74 can be clamped using the screw 80 such that a frictional connection is created and the slider 74 cannot perform any relative movement with respect to the support arm 46.

Alternatively, it is also conceivable that the slider locking mechanism 78 instead comprises an eccentric element, a screw lever or simply a screw to allow the slider 74 to be clamped.

The slider 74 is rod-shaped and comprises an abutment surface 82 configured to abut against a workpiece. In addition, the slider comprises a support element 84 configured to support the support assembly 28 on the support surface 18. Both the abutment surface 82 and the support element 84 are part of a thickened end 86, which is provided on at least one end of the slider 74, wherein the abutment surface 82 is formed by the end face portion of the thickened end 86. The lateral surface of the thickened end 86 is used for supporting the support element 84 on the support surface 18.

In the present example, the slider 74 has a substantially circular cross section. Moreover, also the thickened end 86 has a substantially circular cross section, i.e. the thickened end is shaped as a circular cylinder.

According to a variant, the thickened end 86 is formed by a cap-shaped part or by a ring-shaped part which is provided on the associated end of the slider 74. In this variant, the cap-shaped part or the ring-shaped part forming the thickened end 86 may be made from an elastic material, e.g. plastics material such as rubber. Preferably, this material is chosen such that it can be cut easily using the cutting tool 12. Thus, in case the cap-shaped part or the ring-shaped part is accidentally cut using the cutting tool 12, the cutting tool 12 is not damaged. Following such an accidental cut, the cap-shaped part or the ring-shaped part may be exchanged.

The slider 74 may be made from a metal material or from a different plastics material.

Furthermore, the slider 74 may have an end stop 88 provided at the end opposite the thickened end 86, which also prevents the slider 74 from unintentionally slipping out of the guide mount 76. In addition, the end stop 88 is also configured to support the support assembly 28 on the support surface 18. Also, the end stop 88 may be designated as a thickened end since it is also shaped as a circular cylinder having substantially the same cross section as the thickened end 86.

According to a variant, the end stop 88 is formed by a cap-shaped part or by a ring-shaped part which is provided on the associated end of the slider 74. In this variant, the cap-shaped part or the ring-shaped part forming the end stop 88 may be made from an elastic material, e.g. plastics material such as rubber. Preferably, this material is chosen such that it can be cut easily using the cutting tool 12. Thus, in case the cap-shaped part or the ring-shaped part is accidentally cut using the cutting tool 12, the cutting tool 12 is not damaged. Following such an accidental cut, the cap-shaped part or the ring-shaped part may be exchanged.

Moreover, the slider 74 comprises a lateral clamping surface 90. In the present example the lateral clamping surface is provided on a ring-shaped clamping element mounted on the slider 74. In the present example, the ring-shaped clamping element is slidable with respect to the remaining portions of the slider 74. This clamping element is preferably made from rubber. The clamping functionality provided by the lateral clamping surface 90 will be explained in more detail further below.

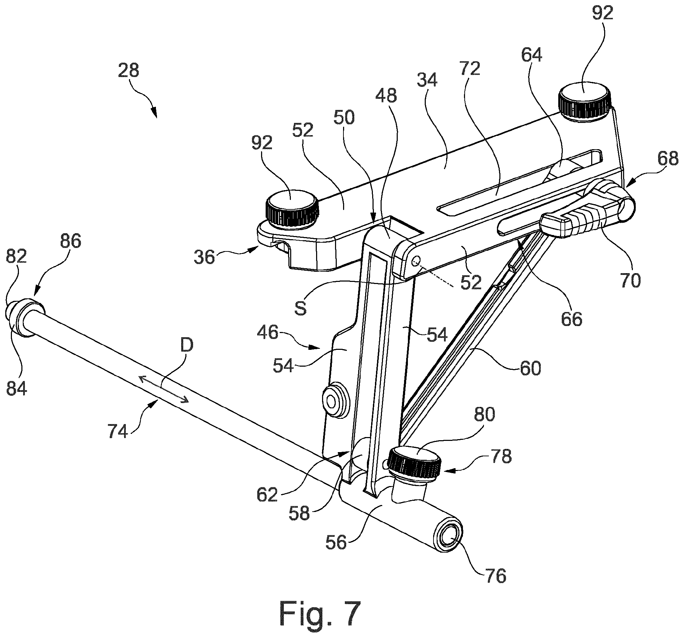

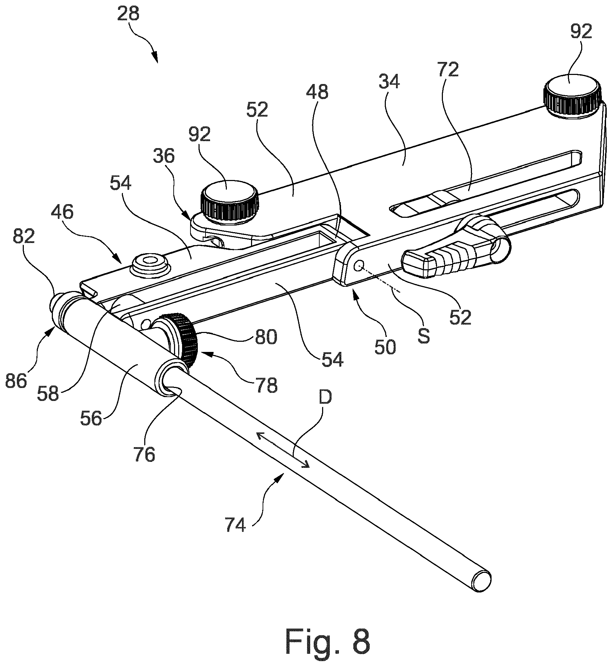

Figures 7 and 8 show another variant of the support assembly 28. In order to avoid unnecessary repetitions, only the differences over the above-described variant will be described here, whereby otherwise the explanations given above apply to this variant as well. In contrast to the previously described variant, the mechanical interface 36 in this variant comprises two screws 92 with a knurled knob instead of an eccentric cam and a lever piece 41. The screws 92 are arranged on one side of the base element 34 and the screw threads are screwed into one or more sliding blocks arranged on the other side of the base element 34 (not shown in the Figures). The sliding blocks can be inserted into the holding groove 32 on the guide rail 20 for assembly.

The screws 92 can be adjusted manually without tools by rotating the associated knurled knob. By tightening the screws 92, the associated sliding blocks are pulled towards the base element 34. Thus, when the support assembly 28 is mounted on the guide rail 20, a clamping force can be generated by the screws 92. This results in a frictional connection between the mechanical interface 36 and the guide rail 20.

Alternatively, it is also conceivable that the screws 92 are screwed into the base element 34 itself and press directly or indirectly against the guide rail 20 when being tightened, such that the support assembly 28 is fixed to the guide rail 20.

In this way, the support assembly 28 can be fixed on the guide rail 20 via the mechanical interface 36 using the screws 92 in both options described. As before, the position of the support assembly 28 can be chosen freely along the guide rail 20.

In addition, as can be seen in particular from Figure 8, in an assembled state of the support assembly 28, only the base element 34 of the support assembly 28 does not extend over the guiding feature 24 of the guide rail 20 with respect to a direction orientated perpendicular to the upper side 22, whereas the knurled knobs of the screws 92 extend beyond it.

Figures 7 and 8 also show a slider 74 according to a further variant. This is an example to show that the slider 74 can be realized in different ways. In general, however, any type of slider 74 is compatible in combination with any of the support assemblies 28 presented here.

The slider 74 in Figures 7 and 8 has only one support element 84. The abutment surface 82 is formed by one end of the slider 74 itself, i.e. not by a thickened end. In addition, this slider 74 has neither a clamping element nor an end stop 88. It is noted that in this variant, a lateral side of the slider 74 could serve as a lateral clamping surface 90.

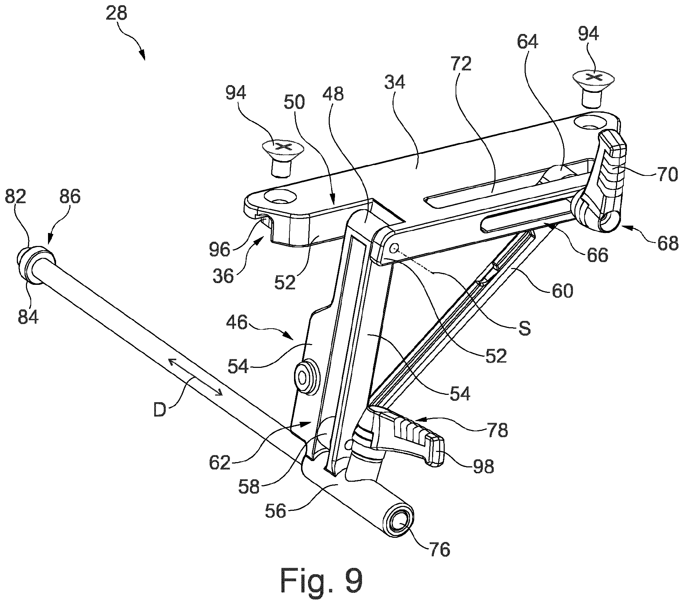

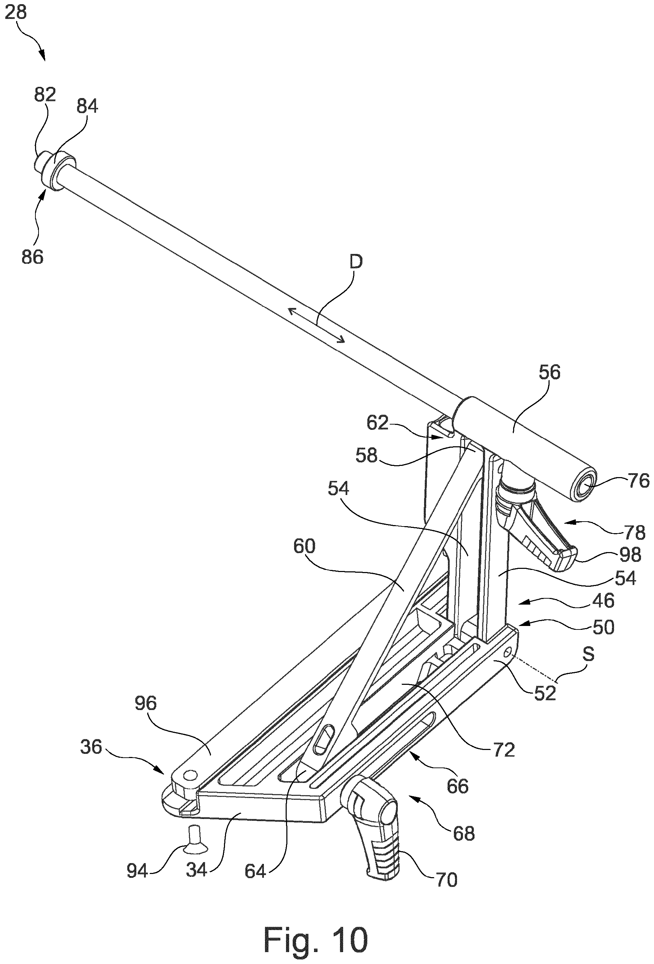

Figures 9 and 10 show a further variant of the support assembly 28. The differences to the support assembly 28 shown in Figures 2 to 6 will likewise be discussed here, whereby otherwise the remaining explanations given above apply also to this variant.

In this variant, screws 94 are provided, which are inserted into an associated sliding block 96 that can be inserted into the holding groove 32 of the guide rail 20.

In a state of the support assembly 28 mounted on the guide rail 20, a clamping force generated by the screws 94 and the sliding block 96 can be generated by tightening the screws 94. This results in a frictional connection between the mechanical interface 36 and the guide rail 20.

Alternatively, it is also conceivable that the screws 94 are screwed into the base element 34 itself and, when tightened, press directly or indirectly against the guide rail 20 so that the support assembly 28 is fixed to the guide rail 20.

In this variant, too, the support assembly 28 can be fixed on the guide rail 20 by means of the screws 94 in both options described. As before, a position of the support assembly 28 along the guide rail may be chosen freely.

In this variant, the slider locking mechanism 78 comprises a screw lever 98 via which the slider 74 can be fixed. The screw lever 98 also allows manual and tool-free actuation. The slider 74 can be clamped via the screw lever 98 so that a frictional connection is generated and the slider 74 cannot perform any relative movement to the support arm 46.

The slider 74 of the support assembly 28 in the present variant is designed analogously to the slider 74 of the variant in Figures 7 and 8.

Overall, the previously described locking variants of the mechanical interface 36 and those of the slider locking mechanism 78 can be combined with one another and selected individually.

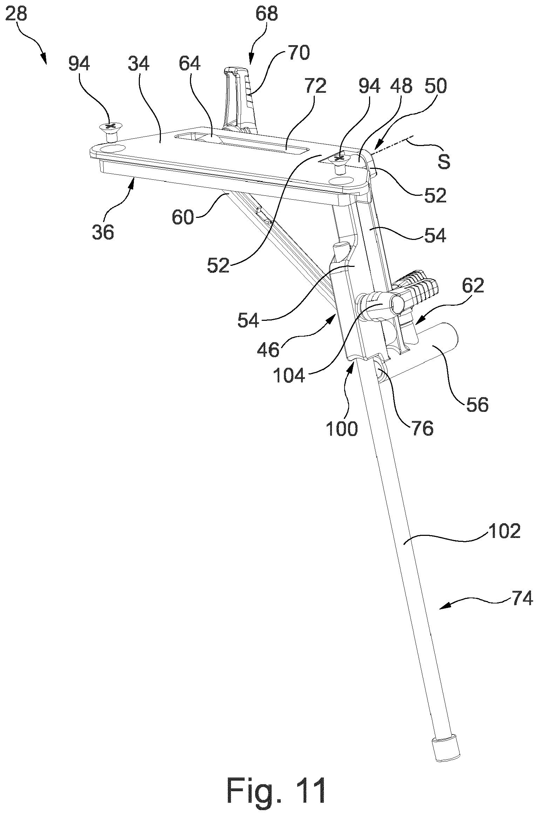

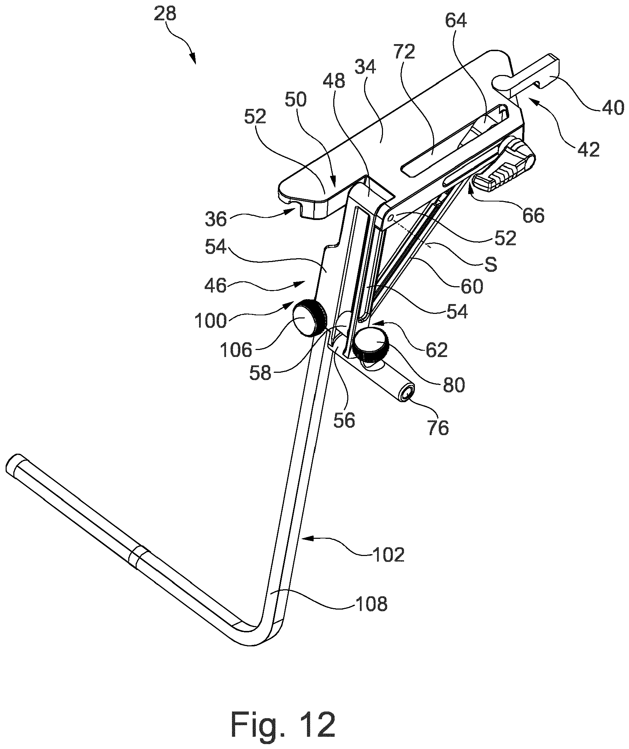

Furthermore, each of the previously explained support assembly 28 variants may comprise a connection interface 100, as shown in Figures 11 and 12. The connection interface 100 is configured for receiving an auxiliary support element 102, which is provided on the support arm 46. The connection interface 100 is formed as a cylindrical channel which is provided in the support arm 46 and which extends in parallel to the main extension direction of the support arm 46.

The auxiliary support element 102 inserted into the connection interface 100 serves to extend the support arm 46 along its main extension.

For locking the auxiliary support element 102, a screw lever 104 is shown as an example in Figure 11 and a screw 106 having a knurled knob is shown in Figure 12, by means of which the auxiliary support element 102 can be steplessly adjusted in each case and can be locked relative to the support arm 46 by clamping. Here too, alternatively, only a screw or an eccentric element can be used.

The auxiliary support element 102 may be formed by the slider 74 as shown in Figure 11. Alternatively, it may be formed by an L-shaped leg element 108, as shown in Figure 12.

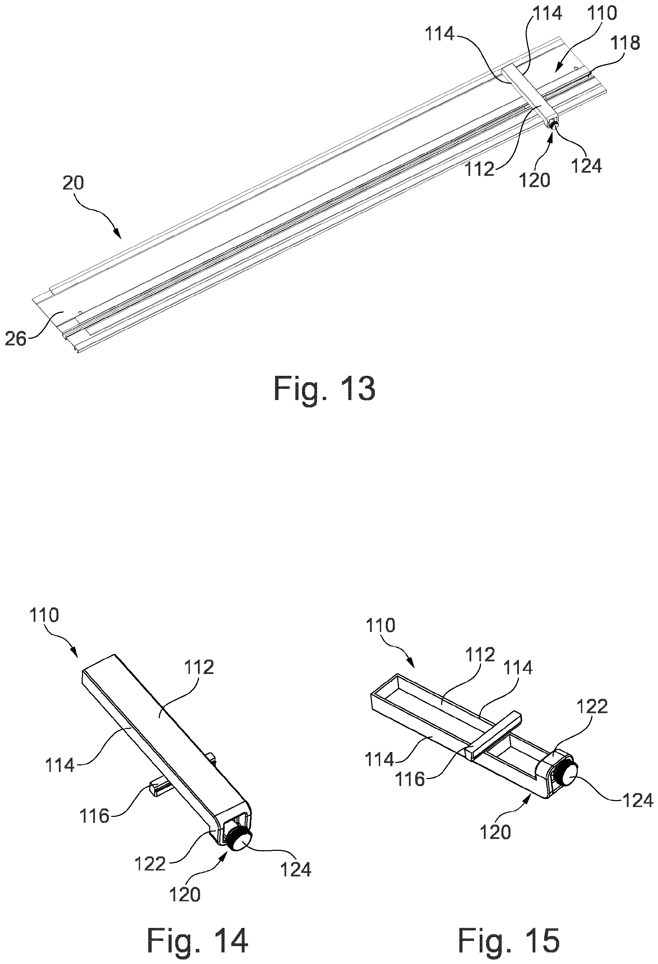

In addition, the guide assembly 10 may comprise an end stop 110 which is shown in Figures 13-15.

The end stop 110 is detachably mounted on the lower side 26 of the guide rail 20 (see in particular Figure 13) and is configured for abutting against a workpiece. It is also possible that a plurality of end stops 110 is connected to the guide rail 20, such that a workpiece may be partially arranged between two or more end stops 110. In particular, the workpiece may abut against one or more of these end stops 110.

The end stop 110 comprises a stop bar 112 with opposing stop sides 114. In addition, a guide bar 116 is provided, which is arranged on the side of the end stop 110 facing the lower side 26 of the guide rail 20.

The guide bar 116 extends substantially transversely with respect to the stop bar 112.

In a mounted condition of the end stop 110, the guide bar 116 projects into a groove 118 on the lower side 26 of the guide rail 20. As a result, the end stop 110 may be slidably guided along the guide rail 20.

In addition, a locking means 120 is provided at one end of the end stop 110, which comprises a locking bar 122. The locking bar 122 is also arranged on the side of the end stop 110 facing the lower side 26 of the guide rail 20. This means that the locking bar 122 and the guide bar 116 are arranged on the same side of the end stop 110. The locking means 120 comprises a screw 124 having a knurled knob, by means of which the end stop 110 can be locked relative to the guide rail 20. To this end, the end stop 110 may be clamped to the guide rail 20 using the screw 124. Here too, alternatively, only a screw, a screw lever or an eccentric element can be used.

It is noted that even though the end stop 110 has been explained in connection with the guide rail 20 and in connection with a guiding assembly 10 using a support assembly 28, the end stop 110 may be used separately, i.e. the end stop 110 may be used on a guide rail 20 without using a guiding assembly 10 or a support assembly 28.

In the following, a method for operating the guiding assembly 10 and the support assembly 28 will be presented.

In a first step S 1, the guide rail 20 of the guiding assembly 10 can be placed on a workpiece 14, as shown in Figure 1.

In the next step S2, a distance of the guide rail 20 from a support surface 18 or the auxiliary support 16 may be adjusted. This is done by adjusting the support assembly 28, for example from a retracted state, as shown in Figure 2, to an unfolded or extended state, as shown in Figure 1. If necessary, the locking mechanism 68 is operated. The support arm 46 of the support assembly 28 is pivoted with respect to the base element 34 of the support assembly 28, and when the second end 56 of the support arm 46 contacts the support surface 18 or the auxiliary support 16, the locking mechanism 68 can be locked.

In a case where a slider 74 is used, the support element 84 of the slider 74 may contact the support surface 18 or the auxiliary support 16.

When using a slider 74, it is also possible to use them as a lateral stop using the abutment surfaces 82, so that the guiding assembly 10 can be aligned relative to a workpiece 14, for example to cut narrow laths.

For this purpose, a position of the slider 74 of the support assembly 28 with respect to the support arm 46 of the support assembly 28 may be adjusted in order to provide an alignment for a workpiece 14 with respect to the guide rail 20. This may constitute a third step S3.

Here, the slider locking mechanism 78 may have to be operated in order to be able to move the slider 74. If the abutment surface 82 of the slider 74 is in contact with the workpiece 14 and the guide rail 20 has the desired alignment relative to the workpiece, the slider locking mechanism 78 is locked.

However, if an auxiliary support element 102 is used, as shown in Figures 10 and 11, there are two adjustment possibilities. On the one hand, the support arm 46 of the support assembly 28 can be pivoted with respect to the base element 34 as described above. In addition, the auxiliary support element 102 can be adjusted by moving it along the connection interface 100. In this mode of use, only the auxiliary support element 102 would be in contact with the support surface 18 or the auxiliary support 16.

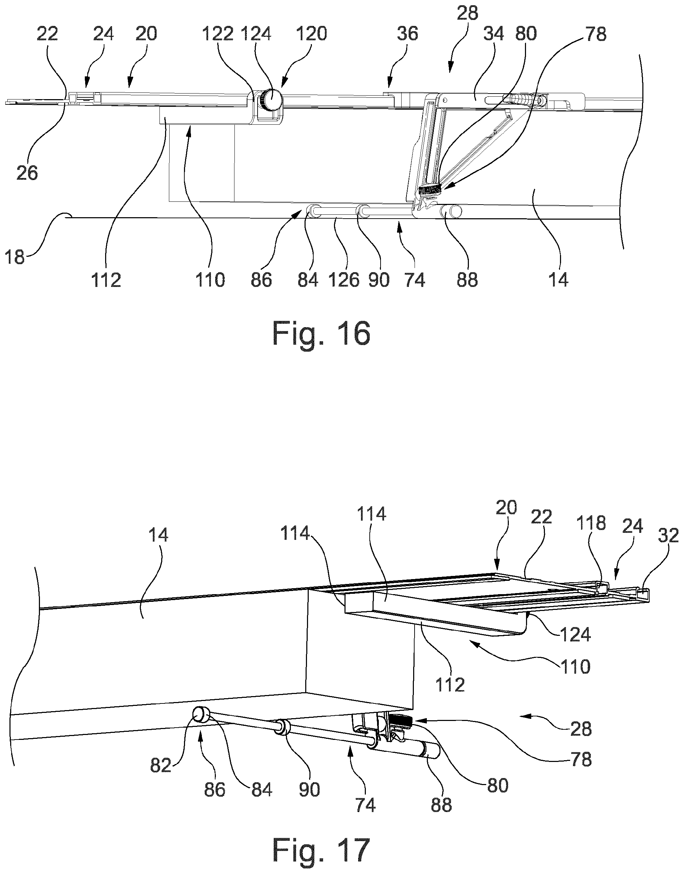

Figures 16 and 17 show a further function of the guiding assembly 10. Here, a workpiece 14 is accommodated between the slider 74 and the guide rail 20. More precisely, the workpiece 14 is clamped between the guide rail 20 and the support assembly 28 by pivoting the support arm 46 of the support assembly 28 with respect to the base element 34 of the support assembly 28.

In this case, the slider 74 is first pulled out so that it runs under the guide rail 20. To do this, it may be necessary to open the slider locking mechanism 78 as described above. In addition, the height of the support assembly 28 or its support arm 46 is adjusted so that there is sufficient space between the slider 74 and the guide rail 20 such that, in the next step, the workpiece 14 can be accommodated between the slider 74 and the guide rail 20.

In a next step, the workpiece 14 is positioned relative to the guiding assembly 10.

The slider 74 and the guide rail 20 are then moved towards each other. More precisely, the support arm 46 is pivoted with respect to the base element 34 and, thus, with respect to the guide rail. Thus, the workpiece 14 is contacted by the lateral clamping surface 90 of the slider 74 and/or by the thickened end 86 of the slider 74. In addition, the lower side 26 of the guide rail 20 contacts the opposite side of the workpiece 14.

A clamping force is then applied to the workpiece 14 by pushing the slider 74 and the guide rail 20 together, and the locking mechanism 68 is locked such that at least a portion of the previously applied clamping force acts on the workpiece 14. The clamping force applied to the workpiece 14 fixes the workpiece 14 relative to the guide assembly 10.

In this way, the workpiece 14 is also kept at a distance from the support surface 18, since it rests on the slider 74. In other words, a gap 126 is formed between the support surface 18 and the workpiece 14.

Furthermore, the workpiece 14 can additionally be fixed by the end stops 110 described above.

The workpiece 14 is then being cut. The distance between the guide rail 20 and the slider 74 must be at least the cutting depth of the saw blade.

Moreover, during cutting of the workpiece 14, a portion of the saw blade may reach the gap 126. Thus, using the saw blade, the workpiece 14 may be cut over its full depth. At the same time, a contact between the saw blade and the support surface 18 may be avoided. Thus, a precise and high-quality cut may be done without risking damage on the support surface 18.

It is understood that in cases in which the workpiece 14 is not cut but modified in a different manner, the same applies to any implement used for modifying the workpiece 14. This means that a portion of the implement may reach the gap 126, thereby allowing for a high-quality modification and avoiding damage on the support surface 18 at the same time.

In this context, the thickened end 86 may be formed by a cap-shaped part or by a ring-shaped part which is provided on the associated end of the slider 74. The thickened end 86 may be made from an elastic material, e.g. plastics material such as rubber.

Also, the ring-shaped clamping element forming the clamping surface 90 may be made from an elastic material, e.g. plastics material such as rubber. Preferably, the ring-shaped clamping element and the part forming the thickened end 86 are made from the same material.

This material is chosen such that it can be cut easily using the cutting tool 12. Thus, in case the thickened end 86 and/or the ring-shaped clamping element forming the clamping surface 90 is accidentally cut using the cutting tool 12, the cutting tool 12 is not damaged.

It is noted that in order to execute the method for operating the guiding assembly 10, the guiding assembly 10 needs to be provided.

To this end, the guide rail 20 and the support assembly 28 need to be provided.

Subsequently, the support assembly 28 needs to be connected to the guide rail 20 using the mechanical interface 36 of the support assembly 28.

In other words, a method for producing a guiding assembly 10 or for mounting the guiding assembly 10 needs to be executed.

### LIST OF REFERENCE SIGNS

- 10: guiding assembly
- 12: cutting tool
- 14: workpiece
- 16: auxiliary support
- 18: support surface
- 20: guide rail
- 22: upper side
- 24: guiding feature
- 26: lower side
- 28: support assembly
- 30: end regions
- 32: holding groove
- 34: base element
- 36: mechanical interface
- 38: profile
- 40: eccentric cam
- 41: lever piece
- 42: recess
- 44: stop
- 46: support arm
- 48: first end
- 50: joint
- 52: rib
- 54: support arm rib
- 56: second end
- 58: first end
- 60: support strut
- 62: joint
- 64: second end
- 66: translatory guiding mechanism
- 68: locking mechanism
- 70: screw lever
- 72: opening
- 74: slider
- 76: guide mount
- 78: slider locking mechanism
- 80: knurled screw
- 82: abutment surface
- 84: support element
- 86: thickened end
- 88: end stop
- 90: clamping element
- 92: knurled screw
- 94: screws
- 96: sliding block
- 98: screw lever
- 100: connection interface
- 102: auxiliary support element
- 104: screw lever
- 106: knurled screw
- 108: L-shaped leg element
- 110: end stop
- 112: stop bar
- 114: stop sides
- 116: guide bar
- 118: groove
- 120: locking means
- 122: locking bar
- 124: knurled screw
- 126: gap

- D: sliding direction
- E: axis
- S: axis

- S1: first step
- S2: second step
- S3: third step

## Claims

1. A support assembly (28) for a guide rail (20) for a cutting tool (12), the support assembly (28) comprising
a base element (34) comprising a mechanical interface (36) which is configured for a detachable connection with the guide rail (20),
a support arm (46) having a first end (48) pivotably supported on the base element (34) and a second end (56) configured to support the support assembly (28) on a support surface (18), and
a locking mechanism (68) configured to selectively lock the support arm (46) with respect to the base element (34) in at least two different relative pivotal positions.

2. The support assembly (28) of claim 1, further comprising a support strut (60) coupling the support arm (46) and the base element (34).

3. The support assembly (28) of claim 2, wherein the support strut (60) comprises a first end (58) pivotably supported on the support arm (46) and a second end (64) coupled to the base element (34) via a translatory guiding mechanism (66), and wherein the locking mechanism (68) is configured to selectively block the guiding mechanism or wherein the support strut (60) comprises a first end (58) pivotably supported on the base element (34) and a second end (64) coupled to the support arm (46) via a translatory guiding mechanism (66), and wherein the locking mechanism (68) is configured to selectively block the guiding mechanism.

4. The support assembly (28) of any one of the preceding claims, wherein the locking mechanism (68) is configured to selectively lock the support arm (46) with respect to the base element (34) by a form-fit and/or by a frictional engagement.

5. The support assembly (28) of any one of the preceding claims, further comprising a slider translatorily movably supported at the second end (56) of the support arm (46) such that the slider can be selectively moved along a sliding direction oriented substantially perpendicular to a direction of principal extension of the support arm (46).

6. The support assembly (28) of claim 5, wherein the slider comprises an abutment surface (82) configured to abut against a workpiece (14) and/or wherein the slider comprises a support element (84) configured to support the support assembly (28) on the support surface (18).

7. The support assembly (28) of claim 5 or claim 6, further comprising a slider locking mechanism (78) configured to selectively lock the slider with respect to the support arm (46) in at least two different relative translatory positions.

8. The support assembly (28) of any one of claims 5 to 7, wherein the slider comprises a lateral clamping surface (90) for clamping the workpiece (14).

9. The support assembly (28) of any one of the preceding claims, wherein a connection interface (100) for an auxiliary support element (102) is provided on the support arm (46).

10. A guiding assembly (10) for a cutting tool (12), the guiding assembly (10) comprising a guide rail (20) for slidably supporting the cutting tool (12), and a support assembly (28) of any one of the preceding claims, wherein the support assembly (28) is connected to the guide rail (20) via the mechanical interface (36) of the base element (34).

11. The guiding assembly (10) of claim 10, wherein the guide rail (20) comprises an upper side (22), wherein a guiding feature (24) configured to guide the cutting tool (12) is arranged on the upper side (22), and wherein the support assembly (28) does not extend over the guiding feature with respect to a direction oriented perpendicular to the upper side (22).

12. The guiding assembly (10) of claim 10 or 11, wherein the guide rail (20) comprises a lower side (26) provided opposite a side of the guide rail (20) configured for slidably supporting the cutting tool (12), and wherein the support assembly (28) does not extend over the lower side (26) with respect to a direction oriented perpendicular to the lower side (26), if the support assembly (28) is in a retracted state.

13. The guiding assembly (10) of any one of claims 10 to 12, comprising two support assemblies, wherein each support assembly (28) is connected to the guide rail (20) via the mechanical interface (36) of the respective base element (34).

14. The guiding assembly (10) of any one of claims 10 to 13, further comprising at least one end stop (110) detachably mounted on the guide rail (20) and configured for abutting against a workpiece (14).

15. A use of a support assembly (28) of any one of claims 1 to 9 for arranging a guide rail (20) at a distance from a support surface (18) and/or for aligning a guide rail (20) for a cutting tool (12) with respect to a workpiece (14) and/or for clamping a workpiece (14).

16. A use of a guiding assembly (10) of any one of claims 10 to 14, for clamping a workpiece (14) between a portion of the support assembly and a portion of the guide rail (20).

17. A method for operating a guiding assembly (10) of any one of claims 10 to 14, comprising
adjusting a distance of the guide rail (20) from a support surface (18) by pivoting the support arm (46) of the support assembly (28) with respect to the base element (34) of the support assembly (28) (S2) and/or
adjusting a position of the slider of the support assembly (28) with respect to the support arm (46) of the support assembly (28) in order to provide an alignment for a workpiece (14) with respect to the guide rail (20) (S3) and/or clamping a workpiece (14) between the guide rail and the support assembly (28) by pivoting the support arm (46) of the support assembly (28) with respect to the base element (34) of the support assembly (28).
